# EUROPEAN PATENT APPLICATION

(11) **EP 3 779 524 A1**
(43) Date of publication of application: **17.02.2021**
(21) Application number: 19785005.0
(22) Date of filing: 27.03.2019
(51) Int. Cl.: G02B 5/00, G02B 7/02, G03B 9/00, G03B 11/00

(54) **LIGHT-SHIELDING FILM FOR OPTICAL EQUIPMENT AND LIGHT-SHIELDING LAMINATED FILM FOR OPTICAL EQUIPMENT, LIGHT-SHIELDING RING FOR OPTICAL EQUIPMENT USING SAME, DIAPHRAGM MEMBER FOR OPTICAL EQUIPMENT, SHUTTER MEMBER FOR OPTICAL EQUIPMENT, LENS UNIT, AND CAMERA MODULE**

(30) Priority: 11.04.2018 JP 2018076190
(71) Applicant: Kimoto Co., Ltd., Saitama 338-0013 (JP)
(72) Inventor: YAMAMOTO, Hiroki, Saitama-shi, Saitama 338-0013 (JP); NAGAHAMA, Tsuyoshi, Saitama-shi, Saitama 338-0013 (JP); TOMIZAWA, Shuzo, Saitama-shi, Saitama 338-0013 (JP); TOSHIMA, Yasumaro, Saitama-shi, Saitama 338-0013 (JP)
(74) Representative: Strehl Schübel-Hopf & Partner
(86) International application number: PCT/JP2019/013288
(87) International publication number: WO 2019/198511

(57) **Abstract**

A light-shielding film and the like are provided which have a light shielding property and a low reflectivity required for optical device usage and in which heat and smoke generation due to absorption of near-infrared light is reduced. A light-shielding film 100 has a laminated structure that includes a base material film 11, a light-shielding layer 21 provided on one principal surface 11a side of the base material film 11, and a light-shielding layer 31 provided on the other principal surface 11b side. The light-shielding layers 21 and 31 contain at least a binder resin, and pigments dispersed in the binder, and have an optical density equal to or higher than 1.5, and a 60-degree glossiness less than 10%. The light-shielding film has a spectral reflectivity equal to or higher than 20%, the spectral reflectivity being measured in conformity with JIS R 3106 and being in a near-infrared region ranging from 700 cm⁻¹ to 1500 cm⁻¹, inclusive. Preferably, the base material film 11, the light-shielding layer 21, and/or the light-shielding layer 31 have inclined end surfaces 12, 22 and 32 that cause the film width to flare from the light-shielding layer 21 to the light-shielding layer 31.

## Description

### Technical Field

The present invention relates to a light-shielding film for an optical device and a laminated light-shielding film for an optical device, and a light-shielding ring for an optical device, a diaphragm member for an optical device, a shutter member for an optical device, a lens unit and a camera module including the same.

### Background Art

For example, information communication terminals such as mobile phones and smartphones, electronic devices such as compact cameras, digital cameras, digital video cameras, projectors and vehicle-mounted cameras each internally include a camera module for taking an image of a subject and converting the image into an image signal. Typically, the camera module includes: an imaging element that images a subject; and a lens unit for forming an image of the subject on the imaging element. Typically, the lens unit includes a combination of multiple lenses.

This type of an optical device is required to remove unnecessary incident light and reflected light, and prevent halation, lens flares, ghosts and the like from occurring to thereby improve the image quality of a taken image. Accordingly, fixed members such as a shielding plate and a ring-shaped member, movable members such as shutter blades and diaphragm blades, a module inner wall material and the like for regulating a light receiving range and preventing light from leaking between the members, require a high light shielding property in many cases. Accordingly, various lens units, camera modules and the like where such light-shielding members having a high light shielding property are arranged, have been proposed.

As such light-shielding members, light-shielding films have been proposed where light-shielding layers containing carbon black as a light-shielding pigment, glidant, microparticles, a binder resin and the like are formed on both surfaces of a base material film (see Patent Literatures 1 to 3).

### Citation List

### Patent Literature

Patent Literature 1: Japanese Patent Laid-Open No. 9-274218
Patent Literature 2: WO2006/016555
Patent Literature 3: Japanese Patent Laid-Open No. 2012-133071

### Summary of Invention

### Technical Problem

According to a de facto standard for the conventional light-shielding members for optical devices, carbon black is adopted as a light-shielding pigment in view of the balance of the light shielding property, blackness, electrical conductivity, cost and the like.

However, according to knowledge of the present inventors, it has been found that the light-shielding members of the conventional art adopting a relatively large amount of carbon black as a light-shielding pigment tend to generate heat owing to absorption of near-infrared light, and exposure to sunlight, pseudo sunlight or the like for several minutes to several tens of minutes or longer brings the surface temperature of a coated film to about several hundred degrees, for example.

Accordingly, in a case where such a light-shielding member of the conventional art is included in a near-infrared camera, a near-infrared sensor, a near-infrared region spectrophotometer or the like, for example, the inside of a module becomes a high temperature; due to the adverse effects of the heat, problems of causing flares, ghosts and the like, and of increasing the measurement error and the like occur.

Furthermore, according to knowledge of the present inventors, it has been found that when the surface temperature of the coated film reaches about several hundred degrees, the coated film of the light-shielding member of the conventional art causes smoke in some cases. In case smoke occurs from the light-shielding member as described above, problems occur in that no normal image can be obtained, obtained images become unsharp, and the resolution of the obtained image decreases.

Meanwhile, modulization has been developed across the world in recent years. A lens unit where lenses and a light-shielding plate are arranged in the optical axis direction, and a camera module, a sensor and the like that include the lens unit and an imaging element further embedded therein, have become manufactured and managed in such modes in manufacturing plants in countries in the world. Accordingly, a light-shielding film and a light-shielding member serving as a component of each module are conveyed and manufactured and managed in each place.

Here, incapability of discriminating the front and rear surfaces of a light-shielding film and a light-shielding member having a desired shape when the light-shielding member is fabricated from the light-shielding film or the light-shielding member is embedded in a module, can cause a manufacturing failure, such as an improper embedment. In these days when modulization across the world is advanced, it is not easy to facilitate thorough management of the light-shielding film and the light-shielding member across the world (confirmation of the front and rear surfaces).

In particular, according to advancement of reduction in size and film thickness of a camera module, a light-shielding member having a significantly small size has been embedded. For example, if a light-shielding film provided with a black light-shielding layer has a size of several centimeters square or smaller, it is significantly difficult to discriminate the front and rear surfaces of the light-shielding film. Particularly, the tendency is remarkable in light-shielding films having a high optical density.

The present invention has been made in view of the problems described above. That is, the present invention has an object to provide a light-shielding film for an optical device, a laminated light-shielding film for an optical device and the like that have a light shielding property and low reflectivity required for optical device usage, and have reduced heat generation and smoke generation, the generation being caused by absorbing near-infrared light. The present invention has another object to provide a light-shielding ring for an optical device, a diaphragm member for an optical device, a shutter member for an optical device, a lens unit, a camera module and the like which include the light-shielding film for an optical device, the laminated light-shielding film for an optical device and the like and in which occurrence of failures, such as reduction in detectability, reduction in resolution, and increase in measurement error, are suppressed.

The present invention has still another object to provide a light-shielding film for an optical device and a laminated light-shielding film for an optical device, and a light-shielding ring for an optical device, a diaphragm member for an optical device, a shutter member for an optical device, a lens unit, a camera module and the like that include any of these films, and facilitate discrimination between the front and rear surfaces while achieving a light-shielding layer with a high optical density; in ordinary cases with such a layer, discrimination between the front and rear surfaces has been difficult.

### Solution to Problem

As a result of earnest examination for solving the problems described above, the present inventors have found out that use of carbon black adopted as a de facto standard, in particular, use of a relatively large amount of carbon black causes various unintentional inconveniences described above, and has finally completed the present invention.

That is, the present invention provides various specific aspects described below.
(1) A light-shielding film for an optical device, the light-shielding film including at least a first light-shielding layer, wherein the first light-shielding layer includes at least a binder resin, and pigments dispersed in the binder, and has an optical density equal to or higher than 1.5, and a 60-degree glossiness less than 10%, and the light-shielding film for an optical device has a spectral reflectivity equal to or higher than 20%, the spectral reflectivity being measured in conformity with JIS R 3106 and being in a near-infrared region ranging from 700 cm⁻¹ to 1500 cm⁻¹, inclusive.
(2) The light-shielding film for an optical device according to (1), wherein the first light-shielding layer contains 5 to 50 parts by mass of heat-shielding pigments and 0 to 10 parts by mass of carbon black relative to 100 parts by mass of the binder resin.
(3) The light-shielding film for an optical device according to (1) or (2), wherein the first light-shielding layer contains no carbon black.
(4) A laminated light-shielding film for an optical device, the laminated light-shielding film having a laminated structure including at least a base material film, and a first light-shielding layer provided on one principal surface side of the base material film, wherein the first light-shielding layer includes at least a binder resin, and pigments dispersed in the binder, and has an optical density equal to or higher than 1.5, and a 60-degree glossiness less than 10%, and the light-shielding film for an optical device has a spectral reflectivity equal to or higher than 20%, the spectral reflectivity being measured in conformity with JIS R 3106 and being in a near-infrared region ranging from 700 cm⁻¹ to 1500 cm⁻¹, inclusive.
(5) The laminated light-shielding film for an optical device according to (4), having a laminated structure including the base material film, the first light-shielding layer provided on the one principal surface side of the base material film, and a second light-shielding layer provided on another principal surface side of the base material film.
(6) The laminated light-shielding film for an optical device according to (5), wherein the second light-shielding layer has an optical density equal to or higher than 1.5, and a 60-degree glossiness less than 10%.
(7) The laminated light-shielding film for an optical device according to (5) or (6), wherein the first light-shielding layer and the second light-shielding layer have a total optical density equal to or higher than 2.5.
(8) The laminated light-shielding film for an optical device according to any one of (5) to (7), wherein the first light-shielding layer and the second light-shielding layer have a 60-degree glossiness difference ranging from 1.5 to 4.0.
(9) The laminated light-shielding film for an optical device according to any one of (5) to (8), wherein a color difference ΔE* ab between the first light-shielding layer and the second light-shielding layer is equal to or larger than 0.2.
(10) The laminated light-shielding film for an optical device according to any one of (5) to (9), wherein the second light-shielding layer contains at least a binder resin, and pigments dispersed in the binder.
(11) The laminated light-shielding film for an optical device according to any one of (5) to (10), wherein the second light-shielding layer contains 5 to 50 parts by mass of heat-shielding pigments and 0 to 10 parts by mass of carbon black relative to 100 parts by mass of the binder resin.
(12) The laminated light-shielding film for an optical device according to any one of (5) to (11), wherein the second light-shielding layer contains no carbon black.
(13) A light-shielding ring for an optical device, including the light-shielding film for an optical device according to any one of (1) to (3), and/or the laminated light-shielding film for an optical device according to any one of (4) to (12), and having a ring-shaped external shape in plan view.
(14) A diaphragm member for an optical device, including the light-shielding film for an optical device according to any one of (1) to (3), and/or the laminated light-shielding film for an optical device according to any one of (4) to (12).
(15) A shutter member for an optical device, including the light-shielding film for an optical device according to any one of (1) to (3), and/or the laminated light-shielding film for an optical device according to any one of (4) to (12).
(16) A lens unit, including at least one or more lenses and at least one or more light-shielding plates arranged in an optical axis direction of the lenses, wherein the at least one or more light-shielding plates include the light-shielding ring for an optical device according to (13), the diaphragm member for an optical device according to (14), and/or the shutter member for an optical device according to (15).
(17) A camera module, including at least one or more lenses and at least one or more light-shielding plates, the camera module including: a lens unit including the lenses and the light-shielding plates arranged in an optical axis direction of the lenses; and an imaging element taking an image of a subject through the lens unit, wherein the at least one or more light-shielding plates include the light-shielding ring for an optical device according to (13), the diaphragm member for an optical device according to (14), and/or the shutter member for an optical device according to (15).

Here, according to a preferable mode, the first light-shielding layer has an inclined end surface that causes the film width to flare in a sectional view, the inclined end surface being exposed in plan view from the normal direction of the first light-shielding layer.

According to another preferable mode, the first light-shielding layer is provided with a hollow portion, and an inclined end surface is provided at an inner periphery of the hollow portion, the inclined end surface causing the film width to flare in a sectional view.

According to a still another preferable mode, the first light-shielding layer and/or the second light-shielding layer have an inclined end surface that causes the film width to flare from the first light-shielding layer to the second light-shielding layer, the inclined end surface being exposed in plan view from the normal direction of the first light-shielding layer.

According to yet another preferable mode, the first light-shielding layer and/or the second light-shielding layer are provided with a hollow portion, and an inclined end surface is provided at an inner periphery of the hollow portion.

### Advantageous Effects of Invention

The present invention can achieve the light-shielding film for an optical device, the laminated light-shielding film for an optical device and the like that have a light shielding property and low reflectivity required for optical device usage, and have reduced heat generation and smoke generation, the generation being caused by absorption of near-infrared light. The present invention can also achieve a light-shielding ring for an optical device, a diaphragm member for an optical device, a shutter member for an optical device, a lens unit, a camera module and the like that suppress occurrence of failures, such as reduction in detectability, reduction in resolution, and increase in measurement error. A preferable mode of the present invention can achieve a light-shielding film for an optical device, a laminated light-shielding film for an optical device and the like that facilitate discrimination between the front and rear surfaces while achieving a light-shielding layer with a high optical density; in ordinary cases with such a layer, discrimination between the front and rear surfaces is difficult. The handling property at a module manufacturing site is improved, which can reduce a load on component management. Accordingly, manufacturing errors, such as improper embedment, can be prevented from occurring, and the yield can be improved. Consequently, the lens unit, the camera module and the like that include any of them are excellent in productivity and economic performance.

### Brief Description of Drawings

[Figure 1] Figure 1 is a perspective view schematically showing a light-shielding film 100 of one embodiment and an original roll thereof.
[Figure 2] Figure 2 is a sectional view taken along II-II of Figure 1.
[Figure 3] Figure 3 is a plan view of the light-shielding film 100 of the one embodiment.
[Figure 4] Figure 4 is a graph showing an example of actually measured data on the spectral reflectivity of the light-shielding film 100.
[Figure 5] Figure 5 is an exploded perspective view schematically showing a light-shielding ring (light-shielding film) of one embodiment, and a lens unit and a camera module that include the ring.
[Figure 6] Figure 6 is a sectional view schematically showing the light-shielding ring (light-shielding film) of the one embodiment.
[Figure 7] Figure 7 is a plan view schematically showing a diaphragm member for an optical device of one embodiment.

### Description of Embodiments

Hereinafter, embodiments of the present invention are described in detail with reference to the drawings. The vertical and lateral positional relationship is based on the illustrated positional relationship unless otherwise noted. The ratios of dimensions in the diagrams are not limited to the illustrated ratios. Note that the embodiments described below are examples for describing the present invention. The present invention is not limited thereto. In this Description, for example, representation of a numerical range of "1 to 100" is assumed to involve both the upper limit value of "100" and the lower limit value of "1". This also applies to representation of the other numerical ranges.

### (First embodiment)

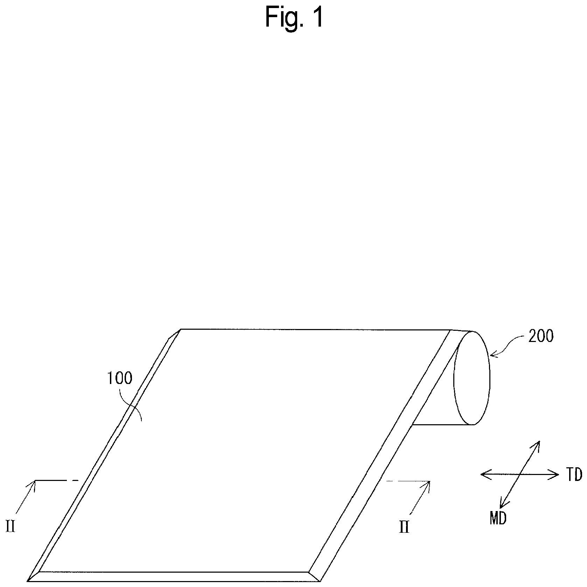

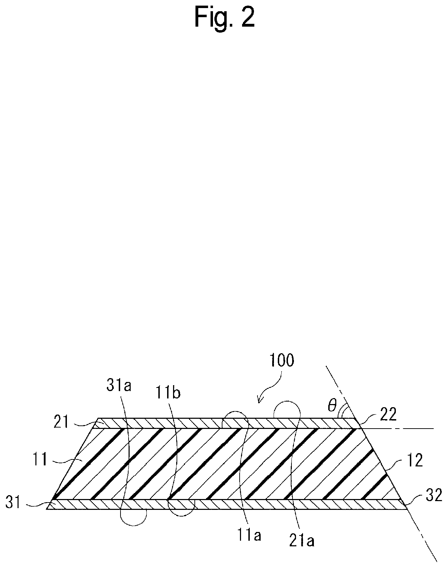

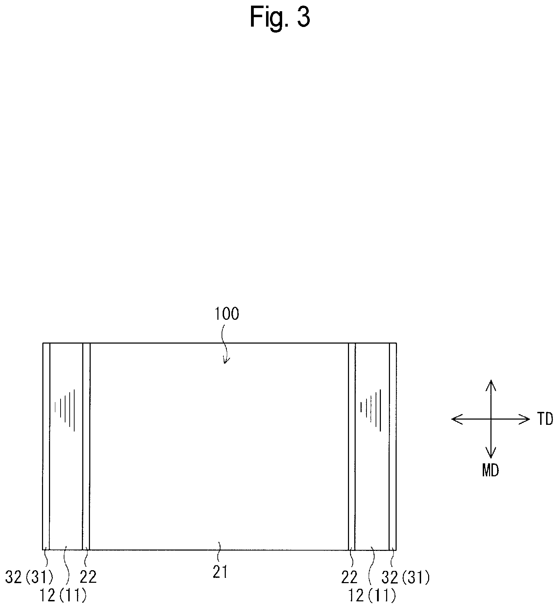

Figure 1 is a perspective view schematically showing a light-shielding film 100 (laminated light-shielding film 100) of a first embodiment of the present invention, and an original roll 200 thereof. Figure 2 is a sectional view (section taken along II-II of Figure 1) showing a main part of the light-shielding film 100. Figure 3 is a plan view of the light-shielding film 100.

The light-shielding film 100 of this embodiment includes at least a base material film 11, a first light-shielding layer 21 provided on one principal surface 11a side of the base material film 11, and a second light-shielding layer 31 provided on the other principal surface 11b side. The light-shielding film 100 has a laminated structure (three-layered structure) where the light-shielding layer 21, the base material film 11, and the light-shielding layer 31 are arranged in this order. Note that in this laminated structure, the first light-shielding layer 21 is arranged on the outermost surface on the front side, and the second light-shielding layer 31 is arranged on the outermost surface on the rear side. As shown in Figure 2, the first and second light-shielding layers 21 and 31 are arranged in a state of being exposed on the outermost surfaces on the front and rear sides. The light-shielding film 100 is wound up into a cored or coreless roll, thereby constituting the original roll 200 that is a rolled body.

Here, in this Description, "provided on one (another) principal surface side of the base material film" means inclusion not only of a mode where the light-shielding layers 21 and 31 are directly mounted on the surfaces (e.g., the principal surface 11a and the principal surface 11b) of the base material film 11 as in this embodiment, but also of a mode where any layer (e.g., a primer layer, an adhesive layer, etc.) intervenes between the surfaces of the base material film 11 and the light-shielding layers 21 and 31 to cause the light-shielding layers 21 and 31 to be arranged apart. The laminated structure including at least the light-shielding layer 21 and the light-shielding layer 31 means inclusion not only of a structure with only the light-shielding layer 21 and the light-shielding layer 31 being directly laminated, but also of the three-layered structure described above, and a structure with any layer intervening between the layers of the three-layered structure.

The type of the base material film 11 is not specifically limited only if the film can support the light-shielding layers 21 and 31. In view of the dimensional stability, mechanical strength, weight reduction and the like, it is preferable to use a synthetic-resin film. Specific examples of the synthetic-resin film include a polyester film, an ABS (acrylonitrile butadiene styrene) film, a polyimide film, a polyamide film, a polyamide-imide film, a polystyrene film, and a polycarbonate film. Alternatively, an acrylic, a polyolefinic, a cellulosic, a polysulfonic, a polyphenylene sulfide, a polyether sulfone, or a polyether ether ketone film may be adopted. Among them, it is preferable to adopt a polyester film or a polyimide film as the base material film 11. In particular, a uniaxial or biaxial stretched film, specifically, a biaxial stretched polyester film, is particularly preferable because of excellence in mechanical strength and dimensional stability. For heat resistant usage, a uniaxial or biaxial stretched polyimide film, polyamide-imide film, and polyamide film are particularly preferable, and the polyimide film and the polyamide-imide film are most preferable. One type of them can be solely adopted, or two or more types can be adopted in combination.

The thickness of the base material film 11 can be appropriately set according to the required performance and usage, and is not specifically limited. In view of reduction in weight and film thickness, the thickness of the base material film 11 preferably ranges from 0.5 µm to 100 µm, inclusive, more preferably ranges from 1 µm to 50 µm, inclusive, further preferably ranges from 5 µm to 40 µm, inclusive, and particularly preferably ranges from 10 µm to 30 µm, inclusive. Note that in view of improvement in adhesiveness with the light-shielding layers 21 and 31, various known surface treatments, such as an anchor treatment and a corona treatment, can be applied to the surface of the base material film 11, as required.

In this embodiment, outer peripheral side surfaces (outer peripheral end surfaces) of the base material film 11 are provided with inclined end surfaces 12. According to the inclined end surfaces 12, the sectional structure of the base material film 11 have a trapezoidal shape with a lower base being longer than an upper base. The base material film 11 has a structure of having the film width that flares from the light-shielding layer 21 to the light-shielding layer 31 (see Figure 2).

The inclined end surfaces 12 are provided so as to be exposed in plan view in the normal direction of the principal surface 11a of the base material film 11 and to be viewable from the principal surface 11a of the base material film 11 when the base material film 11 is in a flat state as shown in Figure 2 (see Figure 3). Specifically, the inclined angle θ (depression angle θ) between the principal surface 11a and the inclined end surface 12 of the base material film 11 is configured to range from 10° to 87°. In view of improving the visibility of the inclined end surfaces 12 from the principal surface 11a in plan view, maintaining the strength of the end surfaces of the base material film 11, and maintaining the productivity, the inclined angle θ preferably ranges from 30° to 85°, more preferably ranges from 40° to 83°, and further preferably ranges from 45° to 80°. Note that as long as the inclined end surfaces 12 are viewable from the principal surface 11a of the base material film 11, the inclined end surfaces 12 may be provided with a transparent or translucent protective layer or the like in order to strengthen the film end surfaces, for example.

Note that the appearance of the base material film 11 may be transparent, translucent or opaque, and is not specifically limited. For example, a foamed synthetic-resin film, such as a foamed polyester film, or a synthetic-resin film containing various pigments may be adopted. In view of improving the visibility of the inclined end surfaces 12 from the principal surface 11a in plan view, the base material film 11 preferably has a total light transmittance ranging from 80.0 to 99.9%, more preferably has that ranging from 83.0 to 99.0%, and further preferably has that ranging from 85.0 to 99.0%. In view of suppressing heat generation and smoke generation due to absorption of near-infrared light, the spectral reflectivity of the base material film 11 measured in conformity with JIS R 3106 and in a near-infrared region ranging from 700 cm⁻¹ to 1500 cm⁻¹ is preferably equal to or higher than 40%, is more preferably equal to or higher than 50%, and is further preferably equal to or higher than 60%. The upper limit value thereof is not specifically limited but is equal to or less than 99%.

In view of equipment with a high light shielding property that is of a light-shielding member, each of the optical densities (OD) of the light-shielding layers 21 and 31 is preferably equal to or higher than 1.5. Note that in this Description, the optical density (OD) has a value obtained by measurement using an optical densitometer (TD-904: GretagMacbeth) and an UV filter, in conformity with JIS-K7651: 1988. In view of equipment with a higher light shielding property, each of the light-shielding layers 21 and 31 is preferably a light-shielding layer, as a single layer, having an optical density (OD) equal to or higher than 1.7, and is further preferably a light-shielding film having an optical density (OD) equal to or higher than 2.0. In a case of lamination of the light-shielding layers 21 and 31, the total optical density (OD) of the entire laminate preferably ranges from 2.5 to 6.0, more preferably ranges from 4.5 to 6.0, and further preferably from 5.0 to 6.0.

In view of equipment of a high matte property, a low glossiness and the like that are of a light-shielding member, the light-shielding layers 21 and 31 each have a 60-degree glossiness less than 10%. Here, the 60-degree glossiness has a value obtained by measuring the glossiness (specular glossiness) (%) of the surfaces of the light-shielding layers 21 and 31 at an incident light receiving angle of 60° using a digital deflection gloss meter (UGV-5K: Suga Test Instrument Co. Ltd.) in conformity with JIS-Z8741: 1997. In view of the balance of the light shielding property, low glossiness, low reflectivity, light absorbance and the like, it is preferable that at least one of the light-shielding layer 21 and the light-shielding layer 31 has a 60-degree glossiness higher than 2% and equal to or less than 10%. Here, in a case where the 60-degree glossiness difference between the light-shielding layers 21 and 31 is set, front and rear discrimination is further facilitated. As one preferable mode, the 60-degree glossiness of the light-shielding layer 21 equals to or higher than 0.01% and less than 10%, more preferably, equals to or higher than 0.1% and less than 8%, and further preferably equals to or higher than 0.3% and less than 5%, and the 60-degree glossiness of the light-shielding layer 31 is higher than 2% and equal to or less than 10%, more preferably equals to or higher than 2.2% and less than 8%, and further preferably equals to or higher than 2.4% and less than 10%. In view of front and rear discrimination, preferably, the light-shielding layer 21 and the light-shielding layer 31 have different 60-degree glossiness such that the 60-degree glossiness difference ranges from 1.0 to 4.5%, preferably, ranges from 1.5 to 4.0%, further preferably, ranges from 1.8 to 3.5%.

In the light-shielding film 100 in this embodiment, according to an ergonomics approach, it is preferable that the light-shielding layer 21 and the light-shielding layer 31, which have the aforementioned optical density and 60-degree glossiness, further have a color difference ΔE* ab equal to or more than 0.2. Note that the color difference ΔE* ab means a value calculated by obtaining the hue L* values, a* values and b* values of the light-shielding layer 21 and the light-shielding layer 31 using a color meter in conformity with JIS-Z8730: 2009 and obtaining a difference thereof. Here, the color difference ΔE* ab between the light-shielding layer 21 and the light-shielding layer 31 may be appropriately set in consideration of the balance of visual discrimination of front and rear surfaces and the optical density (light shielding property). Although not specifically limited, 0.4 or more is preferable, 0.8 or more is more preferable, 1.6 or more is further preferable, and 3.2 or more is particularly preferable. Note that although not specifically limited, the upper limit value of the color difference ΔE* ab between the light-shielding layer 21 and the light-shielding layer 31 is typically 25.0, which serves as a standard.

Furthermore, differentiation in luminance between the light-shielding layer 21 and the light-shielding layer 31 facilitates the front and rear discrimination of the light-shielding film 100. Here, the difference in luminance can be represented by a luminance index L* in CIE 1976 L*a*b* color system. Specifically, the luminance indices L* of the light-shielding layers 21 and 31 preferably range from 1 to 35, inclusive, more preferably range from 1 to 30, inclusive, and further preferably range from 2 to 28, and particularly preferably range from 3 to 26. The difference in luminance indies L* between the light-shielding layer 21 and the light-shielding layer 31 preferably ranges from 1 to 30, inclusive, more preferably from 2 to 20, inclusive, and further preferably from 3 to 10, inclusive.

The light-shielding film 100 of this embodiment is assumed to have a spectral reflectivity equal to or higher than 20% on average, the spectral reflectivity being measured in conformity with JIS R 3106 and being in a near-infrared region ranging from 700 cm⁻¹ to 1500 cm⁻¹, inclusive. 23% or more is more preferable. 25% or more is further preferable. Although the upper limit value is not specifically limited, 99% or less is preferable, and 95% or less is more preferable. Such a light-shielding film 100 having a high spectral reflectivity in a near-infrared region as described above (in other words, the spectral transmittance in the near-infrared region is low) serves as what is called a heat and light shielding film, suppresses heat generation and smoke generation due to absorption of near-infrared light, and suppresses failures, such as reduction in detectability, reduction in resolution, and increase in measurement error. Note that in this Description, measurement of the spectral reflectivity in the near-infrared region means a value obtained in conformity with JIS R 3106 and calibrated using a standard white board (Spectralon SRS99).

Here, in a case where the light-shielding film 100 is a single layer film of the light-shielding layer 21, it is only required that the light-shielding layer 21 satisfies the spectral reflectivity described above. On the other hand, in a case where the light-shielding film 100 is a laminated film as in this embodiment, not only the light-shielding layer 21 but also the entire laminate is required to satisfy the spectral reflectivity described above in order to suppress heat generation and smoke generation due to absorption of near-infrared light. In such view, in the light-shielding film 100 of this embodiment, also for the light-shielding layer 31, the aforementioned spectral reflectivity is preferably equal to or higher than 20%, more preferably equal to or higher than 25%, and further preferably equal to or higher than 30%. Although the upper limit value is not specifically limited, 99% or less is preferable, and 95% or less is further preferable.

The total of the spectral reflectivity and the spectral transmittance of the light-shielding film 100 of this embodiment measured in conformity with JIS R 3106 and in a near-infrared region ranging from 700 cm⁻¹ to 1500 cm⁻¹ is preferably equal to or higher than 60%, more preferably equal to or higher than 65%, and further preferably equal to or higher than 70%. Although the upper limit value is not specifically limited, 99% or less is preferable, and 95% or less is more preferable. Such a light-shielding film 100 with the total of the spectral reflectivity and the spectral transmittance being high (in other words, the absorptance in the near-infrared region is low) suppresses heat generation and smoke generation due to absorption of near-infrared light, and suppresses failures, such as reduction in detectability, reduction in resolution, and increase in measurement error. Note that in this Description, measurement of the spectral transmittance in the near-infrared region means a value obtained in conformity with JIS R 3106 and calibrated using a standard white board (Spectralon SRS99).

The spectral reflectivity and the spectral transmittance of the light-shielding film 100 can be appropriately adjusted by, for example, the spectral reflectivity and the spectral transmittance of the base material film 11, the spectral reflectivities and the spectral transmittances of the light-shielding layer 21 and the light-shielding layer 31, the thickness and material of the base material film 11, the thicknesses and compositions of the light-shielding layer 21 and the light-shielding layer 31 and the like. The adjustment method is not specifically limited.

As the material constituting the light-shielding layers 21 and 31, those known in the art can be used, and the type is not specifically limited. For example, use of the light-shielding film that contains the binder resin and the pigments dispersed in the binder can achieve the light-shielding layers 21 and 31 satisfying the various physical properties described above. Hereinafter, specific examples thereof are described in further detail.

The binder resin may be a thermoplastic resin or a thermoset resin, such as a poly(meth)acrylic acid-based resin, polyester resin, polyvinyl acetate resin, polyvinyl chloride resin, polyvinyl butyral resin, cellulosic resin, polystyrene/polybutadiene resin, polyurethane resin, alkyd resin, acrylic resin, unsaturated polyester resin, epoxy ester resin, epoxy resin, epoxy acrylate resin, urethane acrylate resin, polyester acrylate resin, polyether acrylate resin, phenolic resin, melamine resin, urea formaldehyde resin, diallyl phthalate resin, although not limited to these. Alternatively, a thermoplastic elastomer, thermosetting elastomer, ultraviolet curable resin, electron beam curable resin or the like may be adopted. One type of them can be solely adopted, or two or more types can be adopted in combination. Note that the binder resin may be appropriately selected according to the required performance and usage. For example, for usage requiring heat resistance, a thermoset resin is preferable.

Although not specifically limited, the contained amount (total amount) of the binder resin in the light-shielding layers 21 and 31 ranges, preferably from 40 to 90 percent by mass, more preferably from 50 to 85 percent by mass, and further preferably from 55 to 80 percent by mass, in view of adhesiveness, light shielding property, scratch resistance, slidablity, matte property and the like.

As pigments dispersed in the binder resin, those known in the art can be used, and the type is not specifically limited. Pigments (heat-shielding pigments) that do not absorb light in a near-infrared region ranging from 700 cm⁻¹ to 1500 cm⁻¹, inclusive, or have a small absorptance in this region, are preferably used. Use of such heat-shielding pigments can achieve a heat and light shielding film that suppresses heat generation due to absorption of near-infrared light, and has a high spectral reflectivity in the near-infrared region. Heat-shielding pigments having a spectral transmittance of preferably 50% or higher, more preferably 60% or higher, further preferably 70% or higher in a near-infrared region ranging from 700 cm⁻¹ to 1500 cm⁻¹, inclusive, measured in conformity with JIS K 5602, are used. For example, white, yellow, red, blue and black type heat-shielding pigments are known as heat-shielding pigments having such physical properties. The pigments can be appropriately selected from among pigments known in the art to be adopted.

Specific examples of heat-shielding pigments include inorganic heat shielding pigments that include: for example, metallic oxide heat-shielding pigments, such as complex oxide heat-shielding pigments, such as titanium oxide surface-treated with alumina, silica or the like (e.g., titanium black made by Ishihara Sangyo Kaisya, Ltd. "Tipaque R-820N", "Ti-Pure R706" by DuPont, magnesium oxide, barium oxide, calcium oxide, zinc oxide, zirconium oxide, yttrium oxide, indium oxide, sodium titanate, silicon oxide, nickel oxide, manganese oxide, chromic oxide, ferric oxide, copper oxide, cerium oxide, alumina; complex oxide heat-shielding pigments, such as calcium-titanium-manganese oxides (e.g., "MPT-370" and "LPC-707" made by Ishihara Sangyo Kaisya, Ltd.), iron-cobalt-chrome complex oxide (e.g., daipyroxide brown #9290", "daipyroxide color black #9590" made by Dainichiseika Color & Chemicals Mfg. Co., Ltd.), iron-chrome complex oxide (e.g., "daipyroxide color black #9595" made by Dainichiseika Color & Chemicals Mfg. Co., Ltd., and "Black6350" made by Asahi Kasei Kogyo Co., Ltd.), iron-manganese complex oxide, and copper-magnesium complex oxide (e.g., "daipyroxide color black #9598" made by Dainichiseika Color & Chemicals Mfg. Co., Ltd.), bismuth-manganese complex oxide (e.g., "Black6301" made by Asahi Kasei Kogyo Co.,LTD.), manganese-yttrium complex oxide (e.g., "Black6303" made by Asahi Kasei Kogyo Co.,LTD.), iron-cobalt-chrome complex oxides and iron-cobalt-zinc-chrome complex oxides (e.g., "near-infrared reflective pigments" made by Tokan Material Technology Co., Ltd.), iron-cobalt complex oxides (e.g., " Arctic Black 10C909A" and " Arctic Black 411A" made by Shepherd Color, Inc.); metallic heat-shielding pigments, such as of silicon, aluminum, iron, magnesium, manganese, nickel, titanium, chrome, and calcium; and alloy heat-shielding pigments, such as of iron-chrome, bismuth-manganese, iron-manganese, and manganese-yttrium.

The examples also include organic heat shielding pigments that include: for example, perylene pigments, such as azomethine pigments, such as azo pigments, azomethine black (trade name: chromofine black A1103 made by Dainichiseika Color & Chemicals Mfg. Co., Ltd.), azomethine-azo pigments, lake pigment, thioindigo pigments, anthraquinone pigments (anthanthrone pigments, diaminoanthraquinonyl pigments, indanthrone pigments, flavanthlon pigments, anthrapyrimidine pigments, etc.), and perylene black (K0084 and K0086 made by BASF); perinone pigments; diketopyrrolopyrrole pigments; dioxazine pigments; phthalocyanine pigments; quinophthalone pigments; quinacridone pigments; isoindoline pigments; and isoindolinone pigments.

Among them, complex oxide pigments, and organic heat-shielding pigments are preferable as the heat-shielding pigments. In view of imparting a high light shielding property to the light-shielding layers 21 and 31, heat-shielding pigments that are black, or dark or near black are particularly preferably adopted. Note that as the heat-shielding pigments, one type can be solely adopted, or two or more types can be adopted in combination.

The contained amount (total amount) of the heat-shielding pigments in the light-shielding layers 21 and 31 is not specifically limited. However, in view of dispersibility, film-forming property, handling property, adhesiveness, slideability, matte property, abrasion-resistance and the like, the amount preferably ranges from 5 to 50 percent by mass in terms of a solid content (phr) relative to all the resin components contained in the light-shielding layers 21 and 31, more preferably ranges from 8 to 45 percent by mass, and further preferably ranges from 10 to 40 percent by mass.

Note that the light-shielding layers 21 and 31 contain other pigments other than the heat-shielding pigments described above (hereinafter, simply called "other pigments" in some cases) or dye. That is, one or more type of dark pigments or dye, such as black, gray, purple, blue, brown, red, green pigments or dye can be used in a combined manner to achieve a light-shielding film having a high optical density. For example, black light-shielding films (i.e., black light-shielding layers 21 and 31) containing a binder resin, and heat-shielding pigments, and dark pigments or dye mixed therein as required are preferably adopted as the black light-shielding films.

As the other pigments or dye, those known in the art can be appropriately selected and adopted, and the type is not specifically limited. For example, other black pigments include black resin particles, magnetite black, copper-iron-manganese black, titan black, carbon black and the like. Among them, black resin particles, titan black, and carbon black are preferable, because they are excellent in concealment. One type of them can be solely adopted, or two or more types can be adopted in combination.

Carbon black fabricated by various known manufacturing methods has been known, including oil furnace black, lamp black, channel black, gas furnace black, acetylene black, thermal black, Ketjenblack and the like. However, the type is not particularly limited. In view of imparting electrical conductivity to the light-shielding layers 21 and 31 and prevent electrification due to static electricity, conductive carbon black is particularly preferably used. The carbon black has a long history. For example, various grades of simple carbon black, and carbon black dispersed liquid are commercially available from Mitsubishi Chemical Corporation, Asahi Carbon Co. Ltd., Mikuni-Color, Ltd., Resino Color Industry Co. Ltd., Cabot Corporation, Degussa AG and the like. Any item may be appropriately selected from among them according to the required performance and usage. Note that the particle size of carbon black can be appropriately set according to the required performance and the like without specific limitation. The average particle diameter D₅₀ of the carbon black preferably ranges from 0.01 to 2.0 µm, and more preferably ranges from 0.05 to 1.0 µm, and further preferably ranges from 0.08 to 0.5 µm. Note that the average particle diameter in this Description means the volume reference median diameter (D₅₀) measured by a laser diffraction particle size distribution measuring instrument (e.g., Shimadzu Corporation: SALD-7000 etc.).

Note that in a case of concurrently using other pigments or dye other than the heat-shielding pigments, the spectral reflectivity of the light-shielding film 100 in the near-infrared region sometimes decreases. Accordingly, it is desirable not to use a large amount of other pigments or dye. In such a view, the contained amount (total amount) of other pigments and dye in the light-shielding layers 21 and 31 relative to the total amount of the light-shielding layers 21 and 31 is preferably less than 50 percent by mass, and more preferably less than 30 percent by mass.

In particular, carbon black as other pigments has a high absorptance of near-infrared light. Accordingly, it is desired to use only the required minimum amount. For example, to adjust the surface resistance value, blackness and the like, carbon black or conductive carbon black may be concurrently adopted for the light-shielding layers 21 and 31. In such a case, preferably, the blending ratio of components is 5 to 50 parts by mass of the heat-shielding pigments, 0 to 10 parts by mass of the carbon black, and 0 to 50 parts by mass of other pigments and dye relative to 100 parts by mass of the binder resin. More preferably, the ratio is 8 to 30 parts by mass of the heat-shielding pigments, 0 to 5 parts by mass of the carbon black, and 0 to 30 parts by mass of other pigments and dye relative to 100 parts by mass of the binder resin. In view of keeping the absorptance of near-infrared light to the minimum, it is desired that the light-shielding layers 21 and 31 contain substantially no carbon black.

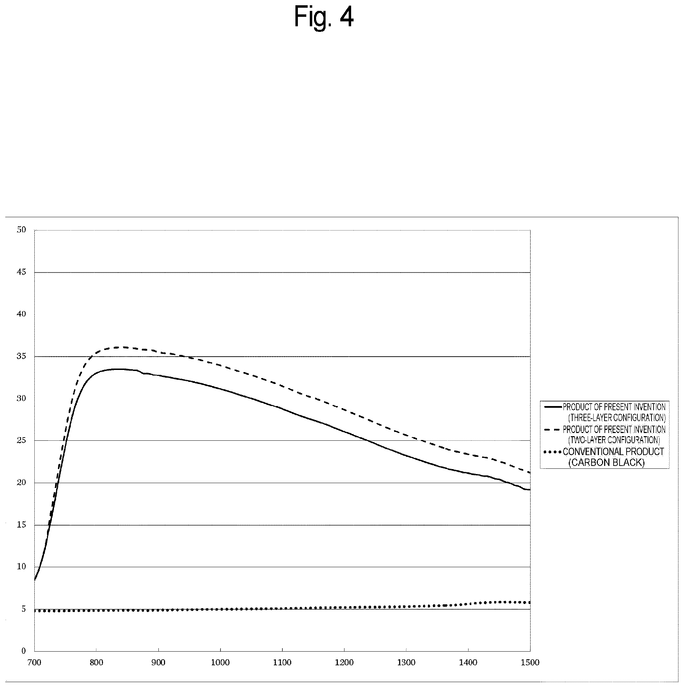

Figure 4 is a graph showing an example of actually measured data on the spectral reflectivity of the light-shielding film 100. Here are shown three data items which are a present invention product 1 (having a three-layer laminated structure that includes a light-shielding layer 21, a base material film 11, and a light-shielding layer 31), a present invention product 2 (having a two-layer laminated structure that includes a light-shielding layer 21, and a base material film 11), and a conventional product (having a three-layer laminated structure that includes a light-shielding layer including carbon black, a base material film 11, and a light-shielding layer including carbon black). The light-shielding film 100 of the present invention product 1 is a laminated light-shielding film that has a total thickness of 42 µm and includes a polyimide film having a thickness of 25 µm as the base material film 11, and heat and light shielding films having a thickness of 8.5 µm (each film including 11.7 parts by mass (phr) of light-shielding pigments, 4.24 parts by mass of conductive filler, and a curing agent and binder precursor (12.9 parts by mass as the binder) as the remaining parts) as the light-shielding layer 21 and the light-shielding layer 31. The spectral reflectivity of the light-shielding film 100 of the present invention product 1 in the near-infrared region ranging from 700 cm⁻¹ to 1500 cm⁻¹, inclusive, was 25%. The light-shielding film 100 of the present invention product 2 is a laminated light-shielding film that has a total thickness of 42 µm and includes a polyimide film having a thickness of 25 µm as the base material film 11, a heat and light shielding film having a thickness of 15.5 µm (11.7 parts by mass (phr) of light-shielding pigments, 4.24 parts by mass of conductive filler, and a curing agent and binder precursor (12.9 parts by mass as binder) as the remaining parts) as the light-shielding layer 21. The spectral reflectivity of the light-shielding film of the present invention product 2 in the near-infrared region ranging from 700 cm⁻¹ to 1500 cm⁻¹, inclusive, was 30%. The light-shielding film of the conventional product includes the carbon black instead of heat-shielding pigments in the present invention product 1. The spectral reflectivity of the light-shielding film of the conventional product in the near-infrared region ranging from 700 cm⁻¹ to 1500 cm⁻¹, inclusive, was 5%.

The thicknesses of the light-shielding layers 21 and 31 can be appropriately set according to the required performance and usage, and is not specifically limited. In view of a high optical density, and reduction in weight and film thickness, each of the thicknesses of the light-shielding layers 21 and 31 is preferably equal to or larger than 0.1 µm, more preferably equal to or larger than 1.0 µm, further preferably equal to or larger than 4.0 µm. The upper limit side is preferably equal to or less than 23 µm, more preferably equal to or less than 20 µm, and further preferably equal to or less than 18 µm.

In view of reduction in weight and film thickness, the total thickness of the light-shielding film 100 preferably ranges from 0.5 µm to 80 µm, inclusive, more preferably equal to or more than 1 µm, further preferably equal to or more than 5 µm, and more preferably equal to or less than 70 µm, and further preferably equal to or less than 60 µm.

As a preferable mode of the light-shielding film 100 of this embodiment, according to an ergonomics approach, the light-shielding layer 21 and the light-shielding layer 31 having the aforementioned optical density and 60-degree glossiness may further adopt a configuration where the 60-degree glossiness difference ranges from 1.5 to 4.0 and a configuration where the color difference ΔE* ab is equal to or more than 0.2, may be adopted. As described above, adoption of the light-shielding layer 21 and the light-shielding layer 31 further having the 60-degree glossiness and/or color difference ΔE* ab improves the perceptual color difference as a result of combination of the optical density, gloss, glaze, color difference and the like. This significantly facilitates front and rear discrimination of the light-shielding film 100 in a noncontact manner, that is, visually.

Methods of adjusting the color difference ΔE* ab between the light-shielding layer 21 and the light-shielding layer 31 include, for example, a method of differentiating the contained amount of the heat-shielding pigments between the light-shielding layer 21 and the light-shielding layer 31, a method of including heat-shielding pigments having different blackness between the light-shielding layer 21 and the light-shielding layer 31, a method of including heat-shielding pigments having different sizes between the light-shielding layer 21 and the light-shielding layer 31, a method of differentiating the surface roughness between the light-shielding layer 21 and the light-shielding layer 31, a method of including binder resins having different hues between the light-shielding layer 21 and the light-shielding layer 31, a method of concurrently including other pigments or dye only in one of the light-shielding layer 21 and the light-shielding layer 31, and a method of differentiating the types of heat-shielding pigments and other pigments or dye to be used between the light-shielding layer 21 and the light-shielding layer 31. However, there is no specific limitation to them. Mixing of various known additives into the light-shielding film can adjust the luminance, hue and/or chroma. Among such adjustment methods, various methods may be performed solely, or in an appropriately combined manner.

Methods of adjusting the 60-degree glossiness between the light-shielding layer 21 and the light-shielding layer 31 include, for example, a method of differentiating the contained amount of the heat-shielding pigments between the light-shielding layer 21 and the light-shielding layer 31, a method of including heat-shielding pigments having different blackness between the light-shielding layer 21 and the light-shielding layer 31, a method of including heat-shielding pigments having different sizes between the light-shielding layer 21 and the light-shielding layer 31, a method of differentiating the surface roughness between the light-shielding layer 21 and the light-shielding layer 31, a method of including binder resins having different hues between the light-shielding layer 21 and the light-shielding layer 31, a method of concurrently including other dark pigments or dye only in one of the light-shielding layer 21 and the light-shielding layer 31, and a method of differentiating the types of heat-shielding pigments and other pigments or dye to be used between the light-shielding layer 21 and the light-shielding layer 31. However, there is no specific limitation to them. Mixing of various known additives into the light-shielding film can adjust the 60-degree glossiness. Among such adjustment methods, various methods may be performed solely, or in an appropriately combined manner.

The outer peripheral side surfaces of the light-shielding layers 21 and 31 are provided, at both the side surfaces (two sites), with inclined end surfaces 22 and 32 (outer peripheral end surfaces 22 and 32) with inclined angle θ corresponding to the inclined end surfaces 12 described above. These inclined end surfaces 22 and 32 are provided so as to be exposed in plan view in the direction of the normal of the principal surface 21a of the light-shielding layer 21 and to be viewable from the principal surface 21a of the light-shielding layer 21 when the light-shielding layers 21 and 31 are in a flat state as shown in Figure 2. Specifically, the inclined angle θ (depression angle θ) between the principal surface 21a and the inclined end surfaces 22 and 32 of the light-shielding layer 21 is configured to range from 10° to 87°. Note that as long as the inclined end surfaces 22 and 32 are viewable from the principal surface 21a of the light-shielding layer 21, the inclined end surfaces 22 and 32 may be provided with a transparent, translucent protective layer or the like in order to strengthen the film end surfaces, for example. Such a configuration and use of difference in hue, chroma, luminance, transparency, 60-degree glossiness, total light transmittance and the like between the base material film 11 and the light-shielding layers 21 and 31 further improve the discrimination between the light-shielding layers 21 and 31. Here, although not specifically limited, similar to the inclined end surfaces 12, the inclined angle θ between the inclined end surfaces 22 and 32 preferably ranges from 10° to 87°, more preferably ranges from 30° to 85°, further preferably ranges from 40° to 83°, and particularly preferably ranges from 45° to 80°. According to the configuration of the inclined angle identical or equivalent to that of the inclined end surfaces 12, the end surface strength tends to be easily maintained high, and the productivity tends to be easily improved.

Note that the light-shielding layers 21 and 31 may contain various additives known in the art. Their specific examples include a matting agent (delustering agent), glidant, conductive agent, flame retardant, antimicrobial, mildew-proofing agent, antioxidant, plasticizer, leveling agent, flow regulator, antifoam, dispersant and the like. However, there is no specific limitation to them. The matting agent may be organic microparticles, such as crosslinked polymethyl methacrylate particles or crosslinked polystyrene particles, inorganic microparticles, such as silica, magnesium aluminometasilicate or titanium oxide or the like. However, there is no specific limitation to them. The glidant may be: hydrocarbon glidant, such as polyethylene, paraffin, or wax; fatty acid glidant, such as stearic acid, or 12-hydroxystearic acid; amide glidant, such as stearic acid amide, oleic amide, or erucamide; ester glidant, such as butyl stearate, or stearic acid monoglyceride; alcoholic glidant; solid glidant, such as metallic soap, talc, or molybdenum disulfide; fluorine resin particles, such as silicone resin particles, polytetrafluoroethylene wax, or polyvinylidene fluoride particles or the like. However, there is no specific limitation to them. Among them, particularly, organic glidant is preferably used. In a case where an ultraviolet curable resin or an electron beam curable resin is used as the binder resin, sensitizer, such as n-butylamine, triethylamine or tri-n-butyl phosphine, ultraviolet absorber or the like may be used, for example. One type of them can be solely adopted, or two or more types can be adopted in combination. Although not specifically limited, in general, each of their contents preferably ranges from 0.01 to 5 percent by mass in terms of a solid content relative to all the resin components contained in the light-shielding layers 21 and 31.

Preferably, the light-shielding layers 21 and 31 have a visible light reflectivity equal to or less than 15%. Here, the visible light reflectivity means a relative total light reflectivity using a spectrophotometer (spectrophotometer SolidSpec-3700 or the like made by Shimadzu Corporation) and barium sulfate as a standard board, with light entering the light-shielding layers 21 and 31 at an incident angle of 8°.
In view of providing a higher light shielding property, the visible light reflectivities of the light-shielding layers 21 and 31 are preferably equal to or less than 10%, further preferably equal to or less than 8%, and particularly preferably equal to or less than 4%. Note that in view of improving the discrimination of the light-shielding layers 21 and 31, the difference in visible light reflectivity between the light-shielding layer 21 and the light-shielding layer 31 is preferably equal to or higher than 1%.

Furthermore, in view of providing sufficient antistatic performance, the light-shielding layers 21 and 31 preferably have a surface resistivity less than 1.0×10¹⁰ **Ω**, more preferably less than 1.0×10⁸ **Ω**, and further preferably less than 5.0×10⁷ **Ω**. Note that in this Description, the surface resistivity is a value measured in conformity with JIS-K6911: 1995.

A method of manufacturing the light-shielding film 100 is not specifically limited only if the configuration described above can be obtained. In view of manufacturing the light-shielding layers 21 and 31 on the base material film 11 highly reproducibly and simply at low cost, conventionally known application methods, such as doctor coating, dip coating, roll coating, bar coating, die coating, blade coating, air knife coating, kiss coating, spray coating, and spin coating, are preferably used.

For example, application liquid that contains the aforementioned binder resin and heat-shielding pigments, and other pigments or dye mixed as any component as required, or an additive or the like, in a solvent is applied on the principal surface of the base material film 11, is dried, and is subsequently subjected to heat treatment, pressure treatment and the like as required, thereby allowing the light-shielding layers 21 and 31 to be film-formed on the base material film 11. As the solvent of the application liquid used here, any of the following solvents and a mixed solvent thereof can be adopted. The solvents include: water; ketone solvents such as methyl ethyl ketone, methyl isobutyl ketone and cyclohexanone; and ester solvent such as methyl acetate, ethyl acetate, and butyl acetate; ether solvents such as methyl cellosolve, and ethyl cellosolve; alcohol solvents, such as methanol, ethanol, and isopropyl alcohol. Note that in view of improvement in adhesiveness between the base material film 11 and the light-shielding layers 21 and 31, an anchor treatment and a corona treatment can be applied, as required. Furthermore, an intermediate layer, such as a primer layer or an adhesive layer, may be provided between the base material film 11 and the light-shielding layers 21 and 31, as required. Note that the light-shielding film 100 having a desired shape can be easily obtained also through a known molding method, such as compression molding, injection molding, blow molding, transfer molding, or extrusion molding. After sheet-shaped formation, vacuum forming or pressure forming can also be applied.

The method of forming the inclined end surfaces 12, 22 and 32 is not specifically limited. Various known methods may be appropriately applied, and the inclined end surfaces 12, 22 and 32 having any inclined angle θ can be fabricated. For example, the laminated light-shielding film provided with the light-shielding layer 21 and the light-shielding layer 31 on the base material film 11 is prepared. The outer peripheral side surfaces are cut off at the inclined angle θ described above, thereby allowing the inclined end surfaces 12, 22 and 32 to be simply provided. In a case where the inclined end surfaces 22 and 32 are not required, the base material film 11 preliminarily provided with the inclined end surfaces 12 having any inclined angle θ may be prepared, and the light-shielding layer 21 and the light-shielding layer 31 may be provided on the base material film 11.

### (Operation)

In the light-shielding film 100 and the original roll 200 in this embodiment, pigments are dispersed in the binder resin. The light-shielding layers 21 and 31 having an optical density equal to or higher than 1.5 and a 60-degree glossiness less than 10% are adopted. The spectral reflectivity of the light-shielding film 100 measured in conformity with JIS R 3106 and in a near-infrared region ranging from 700 cm⁻¹ to 1500 cm⁻¹ is equal to or higher than 20%. Accordingly, while the light-shielding film 100 of this embodiment and the like has a light shielding property and low reflectivity required for optical device usage, heat generation accompanied by absorption of near-infrared light is alleviated, or the amount of heat generation decreases in comparison with the conventional art using carbon black. As a result, generation of failures, such as reduction in detectability, reduction in resolution, and increase in measurement error, is suppressed.

The light-shielding layers 21 and 31 having an optical density equal to or higher than 1.5, and a 60-degree glossiness less than 10% are adopted. Accordingly, in a case where the light-shielding film 100 of this embodiment or the like is used as a heat shielding and light shielding member for an optical device, such as a lens unit or a camera module, unnecessary incident light or reflected light can be removed, and halation, lens flares, ghosts and the like can be prevented from occurring, thereby allowing the image quality of the taken image to be improved.

Furthermore, in the laminated structure described above, the optical density, the 60-degree glossiness and the color difference ΔE* ab of the light-shielding layer 21 and the light-shielding layer 31 exposed to the front and rear surfaces are adjusted as described above. Accordingly, the perceptual color difference is improved. This can significantly facilitate determination of the front and rear surfaces in a noncontact manner, that is, visually. The inclined end surfaces 12 exposed in a viewable manner in plan view can be recognized as luminous portions having gloss and glaze at the film outer peripheries. Accordingly, the front and rear surfaces of the light-shielding film 100 can be especially easily discriminated in a noncontact manner, that is, visually. This is caused by the difference in hue, chroma, luminance, transparency, 60-degree glossiness, total light transmittance and the like between the light-shielding layer 21 and light-shielding layer 31 and the inclined end surfaces 12 (base material film 11).

Also when the light-shielding film 100 of this embodiment and the like is treated in the dark, the inclined end surfaces 12 particularly effectively function. That is, because of the difference between the light-shielding layer 21 and the light-shielding layer 31, the inclined end surfaces 12 (base material film 11) can be recognized as luminous portions having gloss and glaze even in low light. Alternatively, the front and rear surfaces can be discriminated by directly touching the inclined end surfaces 12 with a finger to verify the inclined direction.

### (Modified example)

The present invention can be freely changed within a range without departing from the gist thereof and implemented. For example, instead of the inclined end surfaces 22 and 32, only the inclined end surfaces 12 may be provided. A site where the inclined end surface 12 is formed may be provided at least at a part of the outer peripheral side surface of the base material film 11. Alternatively, the site where the inclined end surface 12 is formed may be provided at least at a part of the outer peripheral side surface of the light-shielding layer 21 (light-shielding layer 31). Further alternatively, the sites may be provided on the opposite side surfaces (two sites) of the base material film 11 so as to extend in an MD direction of the light-shielding film 100 as in this embodiment, or may be provided on one side surface (one site) or the opposite side surfaces (two sites) so as to extend in a TD direction of the base material film 11. Alternatively, the inclined end surfaces 12 may be provided on all the surfaces (entire periphery) of the outer peripheral side surfaces of the base material film 11. The inclined end surfaces 12 extending in the MD direction and/or TD direction may be continuously formed as with this embodiment. Alternatively, the surfaces may be intermittently formed. Furthermore, in the embodiment described above, the mode is described where the light-shielding layer 21 and the light-shielding layer 31 are provided on the front and rear surfaces of the base material film 11. Alternatively, without providing the base material film 11, the laminated structure (two-layer configuration) of the light-shielding layer 21 and the light-shielding layer 31 may be adopted. Alternatively, a single-layer structure only with the light-shielding layer 21 (only with the light-shielding layer 31) may be adopted. Furthermore, it is only required that at least one heat and light shielding layer is provided. For example, in this embodiment, one may be assumed as the light-shielding layer 21, and the other may be assumed as the (non heat shielding) light-shielding layer 31. When the light-shielding film 100 is treated, the laminated structure described above is only required to be in a state where the light-shielding layer 21 and the light-shielding layer 31 are exposed on the front and rear surfaces. At the time of use and implementation thereafter, additional layers, such as a protective layer and another light-shielding layer, may be formed so as to cover the exposed surfaces of the light-shielding layer 21 and the light-shielding layer 31. Further alternatively, the light-shielding layers 21 and 31 may be formed from two or more light-shielding films. For example, the laminated light-shielding layer where the heat and light shielding film 21a and the light-shielding film 21b are laminated may be applied as the light-shielding layer 21. This also applies to the light-shielding layer 31. Here, it is only require to satisfy the aforementioned various performances and physical properties required for the light-shielding layer 21, as the laminate of the heat and light shielding film 21a and the light-shielding film 21b. This also applies to the light-shielding layer 31.

### (Second embodiment)

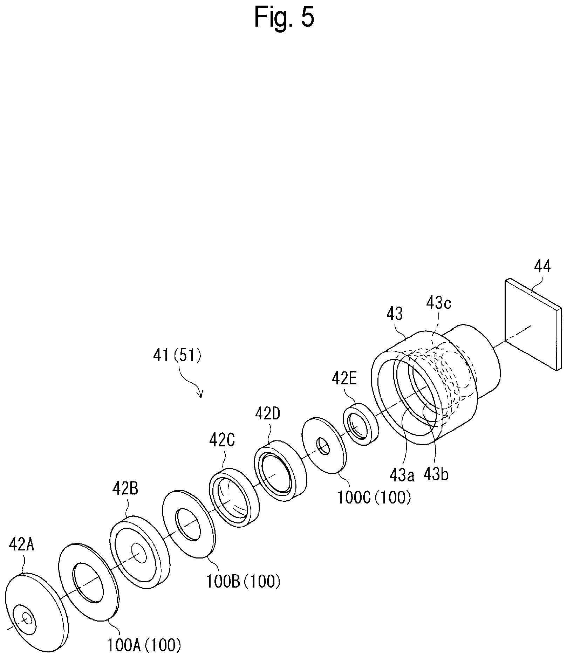

Figure 5 is an exploded perspective view schematically showing a lens unit 41 and a camera module 51 according to a second embodiment of the present invention. The lens unit 41 includes a lens group 42 (lenses 42A, 42B, 42C, 42D and 42E), a multi-stage cylindrical holder 43, and light-shielding rings 100A, 100B and 100C (light-shielding film 100) for an optical device that serve as light shielding spacers. Multiple stepped portions 43a, 43b and 43c are provided on the inner periphery of the holder 43. Through use of the stepped portions 43a, 43b and 43c, the lens group 42 and the light-shielding rings 100A, 100B and 100C for an optical device are accommodated and arranged at predetermined positions in the holder 43 in a state of being arranged and stacked on the same axis (on the same optical axis). Here, various lenses, such as convex lenses and concave lenses, can be used as the lenses 42A, 42B, 42C, 42D and 42E. The curved surfaces may be spherical or aspherical. Meanwhile, the camera module 51 includes the lens unit 41 described above, and an image sensor 44, such as a CCD image sensor or a CMOS image sensor, which is disposed on the optical axis of the lens unit 41 and takes an image of a subject through the lens unit 41.

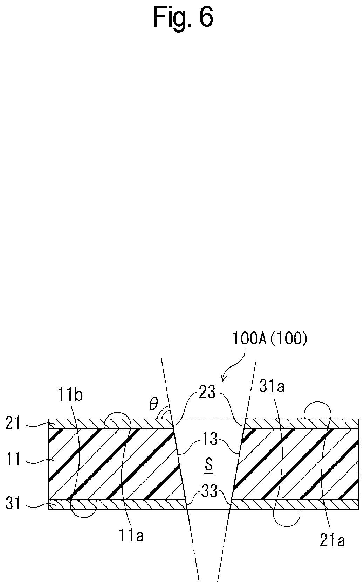

Figure 6 is a sectional view schematically showing the light-shielding ring 100A for an optical device. The light-shielding ring 100A for an optical device is obtained by punching the light-shielding film 100 of the first embodiment described above into a ring shape (hollow cylindrical). Accordingly, the light-shielding ring 100A for an optical device has a laminated structure similar to that of the light-shielding film 100 of the first embodiment described above.

The light-shielding ring 100A for an optical device is a light-shielding plate that has a ring-shaped (hollow cylindrical) external shape and is provided with a circular hollow portion S at a substantially center position in plan view. In this embodiment, the inclined end surfaces 12, 22 and 32 described above are not provided on the outer peripheral side surfaces of the light-shielding ring 100A for an optical device. The outer peripheral side surfaces are formed to have a rectangular shape in a sectional view. That is, the inclined angle θ of the outer peripheral end surface of the light-shielding ring 100A for an optical device according to this embodiment is 90°. Meanwhile, the inner peripheral end surface of the light-shielding ring 100A of this embodiment is provided with inclined end surfaces 13, 23 and 33 corresponding to the respective inclined end surfaces 12, 22 and 32 described above. Note that the light-shielding rings 100B and 100C for an optical device has a configuration similar to that of the light-shielding ring 100A for an optical device, except the difference in the external size and the size of the outer diameter of the hollow portion S. The redundant description here is omitted.

### (Operation)

Also in the light-shielding rings 100A, 100B and 100C for an optical device in this embodiment, heat-shielding pigments are dispersed in the binder resin. The light-shielding layers 21 and 31 having an optical density equal to or higher than 1.5 and a 60-degree glossiness less than 10% are adopted. Accordingly, the spectral reflectivity of the light-shielding rings 100A, 100B and 100C for an optical device measured in conformity with JIS R 3106 and in a near-infrared region ranging from 700 cm⁻¹ to 1500 cm⁻¹ is equal to or higher than 20%. Accordingly, while adoption thereof as the heat shielding and light shielding member for an optical device, such as a lens unit and a camera module, achieves a light shielding property and low reflectivity required for optical device usage, heat generation accompanied by absorption of near-infrared light is alleviated, or the amount of heat generation decreases in comparison with the conventional art using carbon black. As a result, generation of failures, such as reduction in detectability, reduction in resolution, and increase in measurement error, is suppressed.

The light-shielding layers 21 and 31 having an optical density equal to or higher than 1.5, and a 60-degree glossiness less than 10% are adopted. Accordingly, in a case where the light-shielding film 100 of this embodiment or the like is used as a heat shielding and light shielding member for an optical device, such as a lens unit or a camera module, unnecessary incident light or reflected light can be removed, and halation, lens flares, ghosts and the like can be prevented from occurring, thereby allowing the image quality of the taken image to be improved.

Furthermore, in the laminated structure described above, the optical density, the 60-degree glossiness and the color difference ΔE*ab of the light-shielding layer 21 and the light-shielding layer 31 exposed to the front and rear surfaces are adjusted as described above. Accordingly, the perceptual color difference is improved. This can significantly facilitate determination of the front and rear surfaces of the light-shielding rings 100A, 100B and 100C for an optical device in a noncontact manner, that is, visually. Accordingly, the lens unit 41 and the camera module 51, which include these light-shielding rings 100A, 100B and 100C for an optical device, prevent manufacturing failures based on misidentification of the front and rear surfaces also in a depository and during implementation.

Furthermore, the light-shielding ring 100A for an optical device according to this embodiment is provided with the inclined end surfaces 13, 23 and 33, thus further improving discrimination of the light-shielding layers 21 and 31. The inclined end surfaces 13, 23 and 33 are provided on the end surface (inner peripheral end surface) nearer to the optical axis as described above, which can remove unnecessary reflected light, prevent halation, lens flares, ghosts and the like from occurring, and improve the image quality of a taken image.

### (Modified example)

The present invention can be freely changed within a range without departing from the gist thereof and implemented. For example, any of shapes including polygonal shapes, such as a rectangle, a square, and a hexagon, an elliptical shape, an indefinite shape and the like in plan view may be adopted as the external shape of the light-shielding film 100 (light-shielding rings 100A, 100B and 100C for an optical device). The hollow portions S of the light-shielding rings 100A, 100B and 100C for an optical device are formed to be circular in plan view in this embodiment. However, the external shape is not specifically limited. For example, any of shapes including polygonal shapes, such as a rectangle, a square, and a hexagon, an elliptical shape, an indefinite shape and the like in plan view can be adopted. Furthermore, in this embodiment, the inclined end surfaces 12, 22 and 32 described above are not provided. However, one or both of the inclined end surfaces 12 and the inclined end surfaces 22 and 32 may be appropriately provided, as required. Furthermore, in the embodiment described above, the mode is described where the light-shielding layer 21 and the light-shielding layer 31 are provided on the front and rear surfaces of the base material film 11. Alternatively, without providing the base material film 11, the laminated structure (two-layer configuration) of the light-shielding layer 21 and the light-shielding layer 31 may be adopted. Alternatively, a single-layer structure only with the light-shielding layer 21 (only with the light-shielding layer 31) may be adopted. When the light-shielding film 100 is treated, the laminated structure described above is only required to be in a state where the light-shielding layer 21 and the light-shielding layer 31 are exposed on the front and rear surfaces. At the time of use and implementation thereafter, additional layers, such as a protective layer and another light-shielding layer, may be formed so as to cover the exposed surfaces of the light-shielding layer 21 and the light-shielding layer 31. Further alternatively, the light-shielding layers 21 and 31 may be formed from two or more light-shielding films. For example, the laminated light-shielding layer where the light-shielding film 21a and the heat and light shielding film 21b are laminated may be applied as the light-shielding layer 21. This also applies to the light-shielding layer 31. Here, it is only require to satisfy the aforementioned various performances and physical properties required, as a laminate, for the light-shielding layer 21 of the light-shielding film 21a and the heat and light shielding film 21b. This also applies to the light-shielding layer 31.

### (Third embodiment)

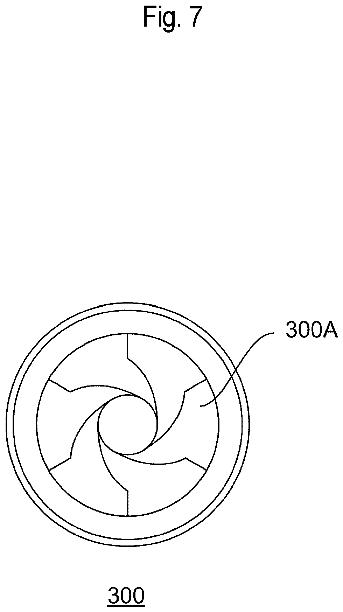

Figure 7 is a plan view schematically showing an diaphragm member 300 for an optical device of a third embodiment of the present invention. The diaphragm member 300 for an optical device is a diaphragm member that is mounted on a photographic lens for a single-lens reflex camera and is for adjusting the light quantity. This embodiment is an iris diaphragm including six diaphragm blades 300A overlapping each other. Through a diaphragm ring and an energy-saving automatic diaphragm drive mechanism, not shown, predetermined light quantity adjustment is performed manually and/or by energization.

Each diaphragm member 300 for an optical device is obtained by punching the light-shielding film 100 of the first embodiment described above into a predetermined shape. Accordingly, the diaphragm member 300 for an optical device has a laminated structure similar to that of the light-shielding film 100 of the first embodiment described above. The diaphragm member 300 for an optical device of this embodiment configured as described above also exerts working effects similar to those of the first and second embodiments described above. Accordingly, redundant description here is omitted.

Note that in the diaphragm member 300 for an optical device, the shape and the number of diaphragm blades 300A are not limited to what is illustrated. Alternatively, any shape and number may be adopted. In this embodiment, the iris diaphragm type diaphragm member is exemplified. Alternatively, known scheme, such as a Waterhouse diaphragm or a rotating diaphragm, may be adopted. In this embodiment, application to the diaphragm member for light quantity adjustment has been exemplified. Alternatively, the same also applies to the light-shielding film 100 of each of the various embodiments described above can also be used as a shutter member and shutter blades, such as of a focal plane shutter and a lens shutter.

### Industrial Applicability

The present invention is widely and effectively usable as high-performance heat shielding and light shielding members for optical devices in the precision machinery field, semiconductor field, optical device field, electronic device and the like. In particular, the present invention is especially usable as light-shielding members, diaphragm members, shutter members and the like used for lens units, camera modules, sensor units and the like mounted on high-performance single-lens reflex cameras, compact cameras, video cameras, digital video cameras, mobile phones, projectors, vehicle-mounted cameras, vehicle-mounted sensors, optical sensors and the like, and further as light-shielding members, diaphragm members, shutter members and the like used for near-infrared cameras, near-infrared sensors and the like.

### Reference Signs List

11 ...Base material film
11a...Front surface (principal surface)
11b...Front surface (principal surface)
12 ...Inclined end surface
13 ...Inclined end surface
21 ...Light-shielding layer
21a...Front surface (principal surface)
22 ...Inclined end surface
23 ...Inclined end surface
31 ...Light-shielding layer
31a...Front surface (principal surface)
32 ...Inclined end surface
33 ...Inclined end surface
41 ...Lens unit
42 ...Lens group
42A... Lens
42B...Lens
42C...Lens
42D...Lens
42E...Lens
43 ...Holder
43a...Stepped portion
43b...Stepped portion
43c...Stepped portion
44 ...Imaging element
51 ...Camera module
100 ...Light-shielding film
100A...Light-shielding ring (laminated light-shielding film)
100B...Light-shielding ring (laminated light-shielding film)
100C...Light-shielding ring (laminated light-shielding film)
200 ...Original roll
300 ...Diaphragm member for optical device
300A...Diaphragm blades
θ ...Inclined angle
S ...Hollow portion
MD ...Flow direction
TD ...Vertical direction

## Claims

1. A light-shielding film for an optical device, the light-shielding film comprising at least a first light-shielding layer,
wherein the first light-shielding layer includes at least a binder resin, and pigments dispersed in the binder, and has an optical density equal to or higher than 1.5, and a 60-degree glossiness less than 10%, and
the light-shielding film for an optical device has a spectral reflectivity equal to or higher than 20%, the spectral reflectivity being measured in conformity with JIS R 3106 and being in a near-infrared region ranging from 700 cm⁻¹ to 1500 cm⁻¹, inclusive.

2. The light-shielding film for an optical device according to claim 1,
wherein the first light-shielding layer contains 5 to 50 parts by mass of heat-shielding pigments and 0 to 10 parts by mass of carbon black relative to 100 parts by mass of the binder resin.

3. The light-shielding film for an optical device according to claim 1 or 2,
wherein the first light-shielding layer contains no carbon black.

4. A laminated light-shielding film for an optical device, the laminated light-shielding film having a laminated structure comprising at least a base material film, and a first light-shielding layer provided on one principal surface side of the base material film,
wherein the first light-shielding layer includes at least a binder resin, and pigments dispersed in the binder, and has an optical density equal to or higher than 1.5, and a 60-degree glossiness less than 10%, and
the light-shielding film for an optical device has a spectral reflectivity equal to or higher than 20%, the spectral reflectivity being measured in conformity with JIS R 3106 and being in a near-infrared region ranging from 700 cm⁻¹ to 1500 cm⁻¹, inclusive.

5. The laminated light-shielding film for an optical device according to claim 4, having
a laminated structure comprising the base material film, the first light-shielding layer provided on the one principal surface side of the base material film, and a second light-shielding layer provided on another principal surface side of the base material film.

6. The laminated light-shielding film for an optical device according to claim 5,
wherein the second light-shielding layer has an optical density equal to or higher than 1.5, and a 60-degree glossiness less than 10%.

7. The laminated light-shielding film for an optical device according to claim 5 or 6,
wherein the first light-shielding layer and the second light-shielding layer have a total optical density equal to or higher than 2.5.

8. The laminated light-shielding film for an optical device according to any one of claims 5 to 7,
wherein the first light-shielding layer and the second light-shielding layer have a 60-degree glossiness difference ranging from 1.5 to 4.0.

9. The laminated light-shielding film for an optical device according to any one of claims 5 to 8,
wherein a color difference ΔE*ab between the first light-shielding layer and the second light-shielding layer is equal to or larger than 0.2.

10. The laminated light-shielding film for an optical device according to any one of claims 5 to 9,
wherein the second light-shielding layer contains at least a binder resin, and pigments dispersed in the binder.

11. The laminated light-shielding film for an optical device according to any one of claims 5 to 10,
wherein the second light-shielding layer contains 5 to 50 parts by mass of heat-shielding pigments and 0 to 10 parts by mass of carbon black relative to 100 parts by mass of the binder resin.

12. The laminated light-shielding film for an optical device according to any one of claims 5 to 11,
wherein the second light-shielding layer contains no carbon black.

13. A light-shielding ring for an optical device, comprising the light-shielding film for an optical device according to any one of claims 1 to 3, and/or the laminated light-shielding film for an optical device according to any one of claims 4 to 12, and having a ring-shaped external shape in plan view.

14. A diaphragm member for an optical device, comprising the light-shielding film for an optical device according to any one of claims 1 to 3, and/or the laminated light-shielding film for an optical device according to any one of claims 4 to 12.

15. A shutter member for an optical device, comprising the light-shielding film for an optical device according to any one of claims 1 to 3, and/or the laminated light-shielding film for an optical device according to any one of claims 4 to 12.

16. A lens unit, comprising at least one or more lenses and at least one or more light-shielding plates arranged in an optical axis direction of the lenses,
wherein the at least one or more light-shielding plates comprise the light-shielding ring for an optical device according to claim 13, the diaphragm member for an optical device according to claim 14, and/or the shutter member for an optical device according to claim 15.

17. A camera module, comprising at least one or more lenses and at least one or more light-shielding plates, the camera module comprising: a lens unit comprising the lenses and the light-shielding plates arranged in an optical axis direction of the lenses; and an imaging element taking an image of a subject through the lens unit,
wherein the at least one or more light-shielding plates comprise the light-shielding ring for an optical device according to claim 13, the diaphragm member for an optical device according to claim 14, and/or the shutter member for an optical device according to claim 15.
